# EUROPÄISCHE PATENTSCHRIFT

(11) **EP 1 165 456 B1**
(45) Veröffentlichungstag und Bekanntmachung des Hinweises auf die Patenterteilung: **10.03.2004**
(21) Anmeldenummer: 00915191.1
(22) Anmeldetag: 30.03.2000
(51) Int. Cl.: C04B 28/26

(54) **VERFAHREN ZUM HERSTELLEN EINES SÄUREFESTEN UND ELEKTRISCH ABLEITFÄHIGEN BAUSTOFFBELAGS**
METHOD FOR PRODUCING AN ACID-RESISTANT, ELECTRICALLY CONDUCTIVE BUILDING MATERIAL COVERING
PROCEDE DE FABRICATION D'UN REVETEMENT EN UN MATERIAU RESISTANT AUX ACIDES ET A DISSIPATION ELECTRIQUE

(30) Priorität: 01.04.1999 DE 19915093
(43) Veröffentlichungstag der Anmeldung: 02.01.2002
(73) Patentinhaber: CRC CHEMICAL RESEARCH COMPANY LTD., Castleblayney, Co. Monaghan (IE)
(72) Erfinder: MÜLLER, Claus-Michael, D-45133 Essen (DE); KLEEN, Eugen, D-46514 Schermbeck (DE)
(74) Vertreter: Schmidt, Frank-Michael, Dr.-Ing.
(86) Internationale Anmeldenummer: PCT/EP2000/002837
(87) Internationale Veröffentlichungsnummer: WO 2000/059843

(56) Entgegenhaltungen:
- EP-A- 0 641 748
- EP-A- 0 884 434
- US-A- 4 870 795
- PATENT ABSTRACTS OF JAPAN vol. 1999, no. 08, 30. Juni 1999 (1999-06-30) & JP 11 071164 A (SEKISUI CHEM CO LTD), 16. März 1999 (1999-03-16)

## Beschreibung

Die Erfindung betrifft ein Verfahren zum Herstellen eines säurefesten und elektrisch ableitfähigen Baustoffbelags auf einem mechanisch stabilen Untergrund, beispielsweise auf einem Boden oder einer Wand.

Ein Verfahren der eingangs genannten Art ist beispielsweise aus dem Arbeitsblatt S 30 der Arbeitsgemeinschaft Industriebau e.V. (AGI) vom Dezember 1994 bekannt, welches Vorschriften zur Herstellung elektrisch ableitfähiger Bodenbeläge enthält. Derartige Bodenbeläge werden im Säureschutzbau dort benötigt, wo spezielle Anforderungen an die Vermeidung von Zündgefahren infolge elektrostatischer Aufladungen gestellt werden, beispielsweise in explosionsgefährdeten Bereichen. Zur Herstellung derartiger Bodenbeläge wird auf einem Untergrund zunächst eine Dichtschicht (Dichtungsbahn oder Flüssigfolie) aufgebracht. Auf dieser Dichtschicht werden Fliesen oder Platten in einem Verlegematerial verlegt. Nach dem Aushärten bzw. Abbinden des Verlegematerials werden die Fugen zwischen den Fliesen oder Platten mit einem Verfugungsmaterial gefüllt. Das Verlegematerial muß elektrisch leitfähig sein. Um einen Kontakt zu einem Erdungsanschluß herzustellen, werden in dem Verlegematerial unter den Fliesen oder Platten Kupferleitbänder eingebettet. Die Bodenbeläge können mit durchgehend ableitfähigen Platten, mit Fliesen mit ableitfähiger Glasur oder mit nicht ableitfähigen Platten hergestellt werden. Werden durchgehend ableitfähige Platten verwendet, so kann das Verfugungsmaterial auch aus einem nicht elektrisch ableitfähigen Kitt oder Mörtel bestehen. Werden Fliesen mit ableitfähiger Glasur verwendet, so müssen sowohl für das Verlegematerial als auch für den Verfugestoff ableitfähige Kitte oder Mörtel verwendet werden.

Gleiches gilt bei Verwendung nicht ableitfähiger Platten; zusätzlich dürfen in diesem Fall die Platten eine Maximalgröße nicht überschreiten und die Stoßfugen müssen oberflächenbündig ausgebildet sein.

Als elektrisch ableitfähige Verlege- und Verfugestoffe werden beispielsweise Kunstharzkitte verwendet, deren spezifischer Widerstand durch Zuschlagstoffe, wie Koksgranulate, Graphit, Kohlenstoffasern und Ruße, soweit abgesenkt wurde, daß sie die für die Ableitung elektrischer Ladungen erforderliche Leitfähigkeit haben. Ferner werden hydraulisch abbindende Mörtel verwendet, die durch Einmischung von Graphit oder Ruß elektrisch ableitfähig eingestellt wurden. Die o.g. Vorschrift definiert einen Gegenstand als leitfähig, wenn sein spezifischer Widerstand < 10 Ω * m beträgt. Neben dem Zusatz von elektrisch leitfähigen Partikeln auf Kohlenstoffbasis wird alternativ der Zusatz von Metallpulvern, Metallfasern oder metallisierten Glas-, Keramik- und Kunststoffkörpern empfohlen.

Nachteilig bei den mit Kohlenstoffpartikeln ableitfähig gemachten Mischungen ist vor allem deren dunkle Färbung, die vor allem im Fugenbereich die Variationsbreite der Gestaltungsmöglichkeiten einschränkt. Der Zusatz von Metallpartikeln andererseits kann zu einer Verschlechterung der Säurebeständigkeit führen.

Aufgabe der Erfindung ist es daher, einen alternativen elektrisch ableitfähigen und säurebeständigen Bodenbelag zu schaffen.

Diese Aufgabe wird erfindungsgemäß durch ein Verfahren mit den Merkmalen des Patentanspruchs 1 gelöst.

Bei dem erfindungsgemäßen Verfahren wird ein mechanisch stabiler Untergrund mit in einem (beispielsweise herkömmlichen) leitfähigen Verlegematerial verlegten Platten belegt, wobei ein Kontakt des Verlegematerials zu einem Ableitanschluß hergestellt wird und wobei zwischen den Platten Fugen verbleiben. Anschließend werden eine Alkalisilikat-Bindemittelkomponente und eine mit dieser Alkalisilikat-Bindemittelkomponente unter Anwesenheit von Wasser abbindende Pulverkomponente bereitgestellt. Die Pulverkomponente wird mit der Alkalisilikat-Bindemittelkomponente unter Anwesenheit von Wasser vermischt, um eine pastöse oder flüssige Verfugungsmasse herzustellen; die Fugen werden mit der Verfugungsmasse gefüllt, wonach die Verfugungsmasse aushärtet.

Bei dem erfindungsgemäßen Verfahren wird von dem seit Jahrzehnten praktizierten Einmischen elektrisch leitfähiger Kohlenstoff- oder Metallpartikel abgegangen. Der Erfindung liegt die Erkenntnis zugrunde, daß eine mittels einer Alkalisilikat-Bindemittelkomponente hergestellte Verfugungsmasse eine ausreichend elektrisch ableitfähige Verfugung ermöglicht. Darüber hinaus gestattet eine Alkalisilikat-Bindemittelkomponente die Herstellung einer Verfugungsmasse mit einer ausgezeichneten chemischen Beständigkeit gegenüber sauren und alkalischen Lösungen, mit einer hohen mechanischen Festigkeit, Rißfreiheit und Feuerbeständigkeit.

Die Verfugungsmasse kann in die Fugen eingespachtelt oder eingeschlämmt werden. Vorzugsweise werden die Fugen derart mit der Verfugungsmasse gefüllt, daß eine im wesentlichen plane Oberfläche des Baustoffbelags gebildet wird.

Es wurde gefunden, daß Beimengungen von Kalziumoxidverbindungen und zementartigen Verbindungen die Säurebeständigkeit verringern. Die Pulverkomponente sollte im wesentlichen frei von derartigen Verbindungen sein, wobei dies bedeutet, daß deren Anteil in der Gesamtmischung kleiner als 3 Gew.-% sein, vorzugsweise deutlich unter dieser Grenze liegen sollte. Erstaunlicherweise hat sich ferner gezeigt, daß auch eisenoxidhaltige Mineralien, wie beispielsweise Granat oder Biotit, die Säurebeständigkeit, insbesondere bei Einwirkung von Schwefelsäure, deutlich verschlechtern. Deshalb wird vorzugsweise eine Pulverkomponente verwendet, die im wesentlichen frei von eisenoxidhaltigen Verbindungen ist.

Ein mechanisch stabiler Untergrund ist jeder in Form eines Bodens oder einer Wand vorliegende Untergrund, der sämtlichen im Einzelfall vorgesehenen mechanischen Beanspruchungen soweit standhält, daß es nicht zu einer Überbeanspruchung der aufgebrachten Schichten oder zu einer Rißbildung kommt.

Die Pulverkomponente der Verfugungsmasse weist vorzugsweise hell gefärbte oder weiße Komponenten sowie ein säureund laugenbeständiges Pigment auf. Mit einer solchen Verfugungsmasse ist eine flexible Farbgestaltung der Fugen möglich.

Bei einer vorteilhaften Weiterbildung des Verfahrens wird eine Pulverkomponente verwendet, die eine inerte Füllkomponente in einem Anteil von bis zu 70 Gew.-% enthält. Als inerte Füllkomponente wird vorzugsweise ein Quarzsand oder eine Mischung verschiedener Quarzsande verwendet. Die Zugabe der inerten Füllkomponente verringert die Kosten der Baustoffmischung und kann darüber hinaus das Abbindeverhalten positiv beeinflussen.

Vorzugsweise wird eine Alkalisilikat-Bindemittelkomponente verwendet, die ein Mol-Verhältnis des Siliziumdioxids zu dem Alkalioxid von weniger als 2,3:1 aufweist. Bei einer Ausführungsform des erfindungsgemäßen Verfahrens wird als Alkalisilikat-Bindemittelkomponente eine wäßrige Alkalisilikatlösung bereitgestellt, die ohne zusätzliche Wasserzugabe mit der Pulverkomponente vermischt wird. Als wäßrige Alkalisikatlösung kann beispielsweise eine Natrium- oder eine Kaliumwasserglaslösung verwendet werden, wobei eine Kaliumwasserglaslösung aufgrund ihrer geringeren Viskosität besser für die Herstellung der Baustoffmischung geeignet ist. Die Alkalisilikatlösung hat vorzugsweise einen Feststoffanteil von 40 bis 50 %. Die Pulverkomponente wird vorzugsweise mit 5 bis 50 Gew.-%, insbesondere etwa 13 bis 14 Gew.-%, Alkalisilikatlösung gemischt. Vorzugsweise wird eine Kaliwasserglaslösung mit einem Mol-Verhältnis SiO₂:K₂O von kleiner 2,3:1, vorzugsweise zwischen 0,8:1 und 1,5:1, verwendet.

Bei einer alternativen Ausführungsform des erfindungsgemäßen Verfahrens kann eine pulverförmige Alkalisilikat-Bindemittelkomponente bereitgestellt werden, wobei die pulverförmige Alkalisilikat-Bindemittelkomponente mit der Pulverkomponente beim Bereitstellen gemischt und anschließend die pastöse oder flüssige Verfugungsmasse hergestellt wird, indem Wasser zu der Mischung zugegeben wird. Die pulverförmige Alkalisilikat-Bindemittelkomponente hat vorzugsweise einen Anteil von 2,5 bis 25 Gew.-% an der bereitgestellten Mischung. Die Mischung wird vorzugsweise mit etwa 5 bis 25 Gew.-% Wasser vermischt.

Eine bevorzugte Ausführungsform des erfindungsgemäßen Verfahrens ist dadurch gekennzeichnet, daß eine Pulverkomponente verwendet wird, die eine aktivierte Siliziumdioxidkomponente aufweist. Unter einer aktivierten Siliziumdioxidkomponente soll im Unterschied zu einer inerten, Siliziumdioxid enthaltenen Komponente eine Komponente verstanden werden, die in der Lage ist, eine Abbindereaktion mit der Alkalisilikatkomponente einzugehen. Eine aktivierte Siliziumdioxidkomponente weist in der Regel oberflächenaktive Mikropartikel auf, die durch Zermahlen, Ausfällen oder Abscheiden hergestellt worden sind. Vorzugsweise wird als aktivierte Siliziumdioxidkomponente wenigstens eine Stoff aus einer Gruppe verwendet, die pyrogene Kieselsäure, Fällungskieselsäure, Silicastaub, Glasmehle und Flug- oder Elektrofilterasche mit hohem Siliziumdioxidanteil umfaßt.

In vorteilhafter Weiterbildung des erfindungsgemäßen Verfahrens wird eine Pulverkomponente verwendet, die neben der aktivierten Siliziumdioxidkomponente wenigstens eine weitere aktivierte Komponente aus einer Gruppe von aktivierten Komponenten enthält, wobei die Gruppe aktivierter Komponenten aktivierte Aluminiumoxykomponenten und die puzzolanen Komponenten Flugasche, Elektrofilterasche, Trass, gebrannter Ölschiefer, gemahlene Hochofenschlacke und gemahlene Hüttensande umfaßt. Vorzugsweise wird eine reaktive Mischung aus der Siliziumdioxidkomponente und der weiteren aktivierten Komponente hergestellt, in der der Anteil der Siliziumdioxidkomponente unter 50 % liegt. Diese reaktive Komponente kann mit einer inerten Komponente und weiteren Zusatz- und Ergänzungstoffen zur Pulverkomponente gemischt werden.

Bei einer bevorzugten Weiterbildung des erfindungsgemäßen Verfahrens wird eine Pulverkomponente verwendet, die eine reaktive Mischung aus der aktivierten Siliziumdioxidkomponente und einer aktivierten Aluminiumoxykomponente enthält, wobei der Anteil der aktivierten Siliziumdioxidkomponente in der reaktiven Mischung geringer ist als der Anteil der aktivierten Aluminiumoxykomponente und wobei die Pulverkomponente im wesentlichen frei von Kalziumdioxidverbindungen, zementartigen Verbindungen und eisenoxidhaltigen Verbindungen ist. Vorzugsweise wird eine Pulverkomponente verwendet, bei der der Anteil der aktivierten Siliziumdioxidkomponente in der reaktiven Mischung etwa 5 bis 50 % des Anteils der aktivierten Aluminiumoxykomponente entspricht. Es hat sich gezeigt, daß mit einer derartigen Mischung eine ausgezeichnete mechanische Festigkeit, Rißfreiheit sowie Säure- und Laugenbeständigkeit erreichbar ist. Außerdem gestattet eine solche Mischung die Verwendung bzw. Auswahl von Komponenten mit geringer Eigenfärbung, womit die Herstellung beständiger, elektrisch ableitfähiger und heller Fugen ermöglicht wird.

Die Aluminiumoxykomponente der reaktiven Mischung kann Aluminiumsilikate, wie beispielsweise Andalusit, Sillimanit, Cyanit und/oder Mullit, oder Alumosilikate, wie beispielsweise Glimmer, enthalten. Vorzugsweise umfaßt die aktivierte Aluminiumoxykomponente wenigstens 60 Gew.-% Aluminiumoxide und/oder Aluminiumhydroxide. Die aktivierten (beispielsweise mikrokristallinen oder amorphen) Aluminiumoxide umfassen sowohl.reine Aluminiumoxide, wie beispielsweise Korund, als auch bestimmte Mischoxide, wie beispielsweise Spinell. Die aktivierten Aluminiumhydroxide können beispielsweise die Mineralien Hydrargillit, Gibbsit, Böhmit, Diaspor, Alumogel oder Sporogelit umfassen; auch können sogenannte Aktivtonerden, Bauxite oder Laterite verwendet werden.

Bei einer bevorzugten Ausführungsform der erfindungsgemäßen Verfahren ist die aktivierte Aluminiumoxykomponente ein calciniertes Bauxit oder Hydrargillit. Als "calciniertes Bauxit" wird ein Zwischenprodukt bei der Aluminiumherstellung nach dem Bayer-Verfahren bezeichnet, wobei es sich im wesentlichen um calciniertes Hydrargillit handelt. Die Verwendung calcinierten Bauxits bietet den Vorteil einer relativ gleichmäßigen Qualität und führt zu raumbeständigen Baustoffen. Ein großer Vorteil ist darüber hinaus die geringe Eigenfärbung der Pulverkomponente, welche weiße oder farbig pigmentierte Beschichtungen und Fugenmassen gestattet. Das säure- und laugenbeständige Pigment wird vorzugsweise der Pulverkomponente beigemischt.

Bei einer bevorzugten Ausführungsform der erfindungsgemäßen Verfahren wird eine Pulverkomponente bereitgestellt, die etwa 30 bis 60 Gew.-%, vorzugsweise 40 bis 50 Gew.-%, der reaktiven Mischung enthält, wobei die reaktive Mischung 5 bis 90 Gew.-%, vorzugsweise 40 bis 80 Gew.-%, der Aluminiumoxykomponente und 4 bis 40 Gew.-%, vorzugsweise 8 bis 15 Gew.-%, der Siliziumdioxidkomponente enthält. Es wurde gefunden, daß der Anteil der Siliziumdioxidkomponente deutlich geringer als der der Aluminiumoxykomponente sein sollte. In vorteilhafter Weiterbildung enthält die Pulverkomponente bis zu 40 Gew.-%, vorzugsweise 2 bis 4 Gew.-%, Hüttensandmehl. Darüber hinaus können der Pulverkomponente noch Glasmehle, gemahlene Hochofenschlacke und/oder gemahlene Hochofensande als Bestandteile der reaktiven Mischung zugegeben werden.

Vorteilhafte Weiterbildungen der erfindungsgemäßen Verfahren sind in den Unteransprüchen gekennzeichnet.

Im folgenden wird eine bevorzugte Ausführungsform des erfindungsgemäßen Verfahrens angegeben, bei der sowohl für ein Verlegematerial für Platten oder Fliesen als auch für ein Verfugungsmaterial Baustoffmischungen verwendet werden, die durch Mischen einer Pulverkomponente mit einer Alkalisilikat-Bindemittelkomponente unter Anwesenheit von Wasser hergestellt werden, wobei die Pulverkomponenten eine eine aktivierte Siliziumdioxidkomponente und eine aktivierte Aluminiumoxykomponente enthaltende reaktive Mischung enthält.

Zunächst wird der mechanisch stabile Untergrund, d.h. ein normgerechter Estrich oder Beton, in der herkömmlichen Weise vorbereitet; es wird z.B. eine Dichtschicht aufgebracht.

Anschließend wird eine Pulverkomponente bereitgestellt, die einen reaktiven Anteil (auch Bindemittelanteil genannt) von etwa 45 Gew.-% enthält. Ferner enthält sie einen inerten Quarzsandgemischanteil von etwa 53 Gew.-%. Andere Begleitund Hilfsstoffe der Pulverkomponente (beispielsweise Fasern und Netzmittel) machen etwa 2 Gew.-% aus.

Die Pulverkomponente ist frei von Zement und zementartigen Verbindungen, langkettigen organischen Verbindungen (Polymeren), Kalziumverbindungen (insbesondere Kalk) und Eisenverbindungen. Die Anwesenheit von Zement, zementartigen Verbindungen oder Kalziumverbindungen würde die Säurefestigkeit zunichte machen. Erstaunlicherweise hat sich gezeigt, daß auch eisenhaltige Mineralien, wie beispielsweise Granat oder Biotit, die Säurebeständigkeit, insbesondere bei Einwirkung von Schwefelsäure, deutlich verschlechtern.

Die reaktive Mischung der Pulverkomponente enthält einen relativ kleinen Anteil Silicastaub und/oder pyrogener Kieselsäure, der vorzugsweise bei 4 bis 7 Gew.-% der Pulverkomponente liegt. Ferner enthält die reaktive Mischung als aktivierte Aluminiumoxykomponente calciniertes Bauxit zu einem Anteil, der etwa 25 bis 35 Gew.-% der Pulverkomponente ausmacht. Darüber hinaus kann die reaktive Mischung der Pulverkomponente Flugasche, Hüttensand, Hochofenschlacke und/oder Alumosilikat- und Aluminiumsilikatverbindungen enthalten.

Außerdem wird eine Kaliwasserglaslösung bereitgestellt, die einen Feststoffanteil von 45 bis 50 Gew.-%, vorzugsweise etwa 50%, aufweist. Die bereitgestellte Pulverkomponente wird mit der Kaliwasserglaslösung vermischt, wobei ein pastöser Alkalisilikatmörtel entsteht. Der Pulverkomponente wird vorzugsweise ein Anteil von 13 bis 14 Gew.-% der 50%igen Kaliwasserglaslösung zugegeben.

Der Alkalisilikatmörtel wird auf den vorbereiteten Untergrund aufgebracht. Vor dem Aufbringen des Alkalisilikatmörtels auf den vorbereiteten Untergrund wird ein Kupferband in einem Raster von 5 x 5 m verlegt. Die Kreuzungspunkte des Kupferbandes werden durch Lötverbindungen verbunden. Außerdem wird ein Kontakt zu einem Erdungsanschluß hergestellt. Anschließend kann die pastöse Baustoffmischung aufgebracht werden, in welcher die Fliesen verlegt werden. Um eine mechanische Zerstörung des Kupferbandes beim Aufbringen des Mörtels zu vermeiden, kann alternativ das ableitfähige Band auch in die frisch aufgebrachte Baustoffmischung eingedrückt werden. Anschließend werden vor Aushärtung des Mörtels säurebeständige Fliesen verlegt. Die Fliesengröße sollte 15 x 15 cm² nicht überschreiten.

Nach einer Aushärtezeit von wenigstens 24 Stunden werden wiederum eine Pulverkomponente und Kaliwasserglaslösung bereitgestellt. Aus beiden Komponenten wird eine Verfugungsmasse gemischt. Die für die Verfugungsmasse bereitgestellte Pulverkomponente enthält eine reaktive Mischung mit einer geringen Eigenfärbung, eine inerte Füllkomponente aus hellem Quarzsand und säure- und laugenbeständige Pigmente. Beispielsweise wird Weißpigment in einem Anteil von etwa 3% verwendet. Die bereitgestellte Pulverkomponente wird mit etwa 13 bis 14 Gew.-% Alkalisilikatlösung gemischt.

Dann werden die Fugen durch Einspachteln oder Einschlämmen der Verfugungsmasse gefüllt. Die Verfugung wird so ausgeführt, daß der Fugenspalt plan ausgefüllt ist, d.h. die sonst übliche konkave Auswaschung vermieden wird.

Anschließend läßt man die Verfugungsmasse aushärten.

## Patentansprüche

1. Verfahren zum Herstellen eines säurefesten und elektrisch ableitfähigen Baustoffbelags auf einem mechanisch stabilen Untergrund, wobei:
a) der Untergrund mit in einem leitfähigen Verlegematerial verlegten Platten belegt wird, wobei ein Kontakt des Verlegematerials zu einem Ableitanschluß hergestellt wird und wobei zwischen den Platten Fugen verbleiben;
b) eine Verfugungsmasse bereitgestellt wird, indem eine Alkalisilikat-Bindemittelkomponente mit einer Pulverkomponente unter Anwesenheit von Wasser vermischt wird, um eine pastöse oder flüssige Verfugungsmasse herzustellen,
c) die Fugen mit der Verfugungsmasse gefüllt werden; und
d) die Verfugungsmasse aushärten gelassen wird.

2. Verfahren nach Anspruch 1, **dadurch gekennzeichnet, daß** eine Pulverkomponente verwendet wird, die im wesentlichen frei von Kalziumoxiden und zementartigen Verbindungen ist.

3. Verfahren nach Anspruch 2, **dadurch gekennzeichnet, daß** eine Pulverkomponente verwendet wird, die im wesentlichen frei von eisenoxidhaltigen Verbindungen ist.

4. Verfahren nach einem der Ansprüche 1 - 3, **dadurch gekennzeichnet, daß** die Alkalisilikat-Bindemittelkomponente ein Mol-Verhältnis des Siliziumdioxids zu dem Alkalioxid von weniger als 2,3: 1 aufweist.

5. Verfahren nach einem der Ansprüche 1 - 4, **dadurch gekennzeichnet, daß** als Alkalisilikat-Bindemittelkomponente eine wäßrige Alkalisilikatlösung bereitgestellt wird, die ohne zusätzliche Wasserzugabe mit der Pulverkomponente vermischt wird.

6. Verfahren nach Anspruch 5, **dadurch gekennzeichnet, daß** die Pulverkomponente mit 5 - 50 Gew.-%, vorzugsweise 13 - 14 Gew.-%, Alkalisilikatlösung gemischt wird, und
daß die Alkalisilikatlösung einen Feststoffanteil von 40 - 50% aufweist.

7. Verfahren nach Anspruch 5 oder 6, **dadurch gekennzeichnet, daß** die Alkalisilikatlösung eine Kaliwasserglaslösung mit einem Mol-Verhältnis SiO₂:K₂O kleiner 2,3:1, vorzugsweise zwischen 0,8:1 und 1,5:1, ist.

8. Verfahren nach einem der Ansprüche 1 - 4, **dadurch gekennzeichnet,**
**daß** eine pulverförmige Alkalisilikat-Bindemittelkomponente bereitgestellt wird,
**daß** die pulverförmige Alkalisilikat-Bindemittelkomponente mit der Pulverkomponente beim Bereitstellen gemischt wird, und
**daß** die pastöse oder flüssige Verfugungsmasse hergestellt wird, indem Wasser zu der Mischung der pulverförmigen Alkalisilikat-Bindemittelkomponente und der Pulverkomponente zugegeben wird.

9. Verfahren nach einem der Ansprüche 1 - 8, **dadurch gekennzeichnet, daß** eine Pulverkomponente verwendet wird, die eine aktivierte Siliziumdioxidkomponente aufweist.

10. Verfahren nach Anspruch 9, **dadurch gekennzeichnet, daß** als aktivierte Siliziumdioxidkomponente wenigstens ein Stoff aus einer Gruppe verwendet wird, wobei die Gruppe pyrogene Kieselsäure, Fällungskieselsäure, Silicastaub, Glasmehl und Flug- oder Elektrofilterasche mit hohem Siliziumdioxidanteil umfaßt.

11. Verfahren nach Anspruch 9 oder 10, **dadurch gekennzeichnet, daß** eine Pulverkomponente verwendet wird, die neben der aktivierten Siliziumdioxidkomponente wenigstens eine weitere aktivierte Komponente aus einer Gruppe von aktivierten Komponenten enthält, wobei die Gruppe von aktivierten Komponenten aktivierte Aluminiumoxykomponenten und die puzzolanen Komponenten Flugasche, Elektrofilterasche, Trass, gebrannter Ölschiefer, gemahlene Hochofenschlacke und gemahlene Hüttensande umfaßt.

12. Verfahren nach Anspruch 11, **dadurch gekennzeichnet,**
**daß** eine Pulverkomponente verwendet wird, die eine reaktive Mischung aus der aktivierten Siliziumdioxidkomponente und einer aktivierten Aluminiumoxykomponente enthält,
wobei der Anteil der aktivierten Siliziumdioxidkomponente in der reaktiven Mischung geringer ist als der Anteil der aktivierten Aluminiumoxykomponente, und
wobei die Pulverkomponente im wesentlichen frei von Kalziumdioxidverbindungen, zementartigen Verbindungen und eisenoxidhaltigen Verbindungen ist.

13. Verfahren nach Anspruch 12, **dadurch gekennzeichnet, daß** eine Pulverkomponente verwendet wird, bei der die aktivierte Aluminiumoxykomponente ein Aluminiumoxid, ein Aluminiumhydroxid und/oder ein Aluminiumsilikat umfaßt.

14. Verfahren nach Anspruch 13, **dadurch gekennzeichnet, daß** die aktivierte Aluminiumoxykomponente wenigstens 60 Gew.-%.Aluminiumoxide und/oder Aluminiumhydroxide enthält.

15. Verfahren nach einem der Ansprüche 12 - 14, **dadurch gekennzeichnet,**
**daß** die Pulverkomponente 30 - 60 Gew.-%, vorzugsweise 40 - 50 Gew.-%, der reaktiven Mischung enthält, und
**daß** die reaktive Mischung 5 - 90 Gew.-%, vorzugsweise 40 - 80 Gew.-%, der Aluminiumoxykomponente und 4 - 40 Gew.-%, vorzugsweise 8 - 15 Gew.-%, der Siliziumdioxidkomponente enthält.

16. Verfahren nach einem der Ansprüche 1 bis 15, **dadurch gekennzeichnet, daß** im Schritt a) ein Verlegematerial verwendet wird, das durch Mischen einer Alkalisilikat-Bindemittelkomponente mit einer Pulverkomponente unter Anwesenheit von Wasser hergestellt worden ist, wobei das Verlegematerial im wesentlichen frei von Kalziumoxidverbindungen, zementartigen Verbindungen und eisenoxidhaltigen Verbindungen sowie frei von leitfähigen metall- und kohlenstoffhaltigen Partikeln ist.

## Claims

1. A method of producing an acid-resistant and electrically conductive building material covering on a mechanically stable substrate, wherein:
a) the substrate is covered with plates laid in a conductive bedding material, whereby contact of the bedding material with a grounding connection is produced and whereby gaps remain between the plates;
b) a jointing composition is provided by mixing an alkali silicate bonding agent component with a pulverulent component in the presence of water in order to produce a pasty or liquid jointing composition,
c) the gaps are filled with the composition; and
d) the jointing composition is permitted to set.

2. A method as claimed in Claim 1, **characterised in that** a pulverulent component is used which is substantially free of calcium oxides and cement-like compounds.

3. A method as claimed in Claim 2, **characterised in that** a pulverulent component is used which is substantially free of compounds containing iron oxide.

4. A method as claimed in one of Claims 1-3, **characterised in that** the alkali silicate bonding agent component has a molar ratio of the silicon dioxide to the alkali oxide of less than 2.3:1.

5. A method as claimed in one of Claims 1-4, **characterised in that** an aqueous alkali silicate solution is provided as the alkali silicate bonding agent component which is mixed with the pulverulent component without the addition of additional water.

6. A method as claimed in Claim 5, **characterised in that** the pulverulent component is mixed with 5-50 % by wt., preferably 13-14 % by wt., alkali silicate solution and that the alkali silicate solution has a solid material content of 40-50%.

7. A method as claimed in Claim 5 or 6, **characterised in that** the alkali silicate solution is a potassium silicate solution with a molar ratio of SiO₂:K₂O smaller than 2.3:1, preferably between 0.8:1 and 1.5:1.

8. A method as claimed in one of Claims 1-4, **characterised in that** a pulverulent alkali silicate bonding agent component is prepared, that the pulverulent alkali silicate bonding agent is mixed with the pulverulent component during the preparation, and that the pasty or liquid jointing composition is produced by adding water to the mixture of the pulverulent alkali silicate bonding agent component and the pulverulent component.

9. A method as claimed in one of Claims 1-8, **characterised in that** a pulverulent component is used which has an activated silicon dioxide component.

10. A method as claimed in Claim 9, **characterised in that** at least one substance from a group is used as the activated silicon dioxide component, the group including pyrogenic silica, precipitated silica, silica dust, glass powder and fly or electrostatic filter ash with a high silicon dioxide content.

11. A method as claimed in Claim 9 or 10, **characterised in that** a pulverulent component is used which, in addition to the activated silicon dioxide component, includes at least one further activated component from a group of activated components, the group of activated components including activated aluminium oxy components and the pozzuolanic components fly ash, electrostatic filter ash, trass, fired oil shale, ground blast furnace slag and ground foundry sands.

12. A method as claimed in Claim 11, **characterised in that** a pulverulent component is used which includes a reactive mixture of the activated silicon dioxide component and an activated aluminium oxy component, whereby the content of the activated silicon dioxide component in the reaction mixture is smaller than the content of the activated aluminium oxy component and whereby the pulverulent component is substantially free of calcium dioxide compounds, cement-like compounds and compounds containing iron oxide.

13. A method as claimed in Claim 12, **characterised in that** a pulverulent component is used, in which the activated aluminium oxy component includes an aluminium oxide, an aluminium hydroxide and/or an aluminium silicate.

14. A method as claimed in Claim 13, **characterised in that** the activated aluminium oxy component contains at least 60% by wt. aluminium oxides and/or aluminium hydroxides.

15. A method as claimed in one of Claims 12-14, **characterised in that** the pulverulent component contains 30-60% by wt., preferably 40-50% by wt., of the reactive mixture and that the reactive mixture contains 5-90% by wt., preferably 40-80% by wt., of the aluminium oxy component and 4-40% by wt., preferably 8-15% by wt., of the silicon dioxide component.

16. A method as claimed in one of Claims 1 to 15, **characterised in that** in step a) a bedding material is used which was produced by mixing an alkali silicate bonding agent component with a pulverulent component in the presence of water, the bedding material being substantially free of calcium oxide components, cement-like compounds and compounds containing iron oxide and free of conductive particles containing metal and carbon.

## Revendications

1. Procédé de fabrication d'un revêtement pour matériaux de construction résistant à l'acide et déviateur électrique sur un substrat mécaniquement stable, danslequel:
a) le substrat est recouvert de plaques posées dans un matériau de pose conducteur, un contact du matériau de pose à une connexion de déviation étant réalisé et des joints existant entre les plaques ;
b) une masse de jointoiement est préparée, en mélangeant un composant liant de silicate alcalin avec un composant pulvérulent en présence d'eau pour fabriquer une masse de jointoiement pâteuse ou liquide,
c) les joints sont remplis avec la masse de jointoiement ; et
d) la masse de jointoiement est laissée à durcir.

2. Procédé selon la revendication 1, **caractérisé en ce que** l'on utilise un composant pulvérulent qui est sensiblement exempt d'oxydes de calcium et de composés de type ciment.

3. Procédé selon la revendication 2, **caractérisé en ce que** l'on utilise un composant pulvérulent qui est sensiblement exempt de composés contenant de l'oxyde de fer.

4. Procédé selon l'une quelconque des revendications 1 à 3, **caractérisé en ce que** le composant liant de silicate alcalin présente un rapport molaire du dioxyde de silicium sur l'oxyde alcalin de moins de 2,3/1.

5. Procédé selon l'une quelconque des revendications 1 à 4, **caractérisé en ce que** l'on prépare comme composant liant de silicate alcalin une solution aqueuse de silicate alcalin qui est mélangée avec le composant pulvérulent sans addition d'eau supplémentaire.

6. Procédé selon la revendication 5, **caractérisé en ce que** le composant pulvérulent est mélangé avec 5 à 50 % en poids, de préférence 13 à 14 % en poids d'une solution de silicate alcalin, et que la solution de silicate alcalin présente une part de matière solide de 40 à 50 %.

7. Procédé selon la revendication 5 ou 6, **caractérisé en ce que** la solution de silicate alcalin est une solution de verre potassique ayant un rapport molaire SiO₂/K₂O inférieur à 2,3/1, de préférence situé entre 0,8/1 et 1,5/1.

8. Procédé selon l'une quelconque des revendications 1 à 4, **caractérisé en ce que**
l'on. prépare un composant liant de silicate alcalin sous forme pulvérulente,
l'on mélange le composant liant de silicate alcalin sous forme pulvérulente avec le composant pulvérulent lors de la préparation,
l'on prépare la masse de jointoiement pâteuse ou liquide en additionnant de l'eau au mélange du composant liant de silicate alcalin sous forme pulvérulente et du composant pulvérulent.

9. Procédé selon l'une quelconque des revendications 1 à 8, **caractérisé en ce que** l'on utilise un composant pulvérulent qui présente un composant de dioxyde de silicium activé.

10. Procédé selon la revendication 9, **caractérisé en ce que**, comme composant de dioxyde de silicium activé, on utilise au moins une matière provenant d'un groupe, le groupe comprenant l'acide silicique pyrogène, l'acide silicique précipité, la poudre de silice, le verre pulvérisé, et les cendres volantes ou cendres d'électrofiltre ayant une part élevée de dioxyde de silicium.

11. Procédé selon la revendication 9 ou 10, **caractérisé en ce que** l'on utilise un composant pulvérulent qui comprend, hormis le composant de dioxyde de silicium activé, au moins un autre composant activé provenant d'un groupe de composants activés, le groupe de composants activés comprenant des composants aluminoxy activés et les composants pouzzolaniques cendres volantes, cendres d'électrofiltre, tuf, schiste bitumeux calciné, laitier de haut fourneau broyé et sablons métallurgiques broyés.

12. Procédé selon la revendication 11, **caractérisé en ce que** l'on utilise un composant pulvérulent qui comprend un mélange réactif constitué du composant de dioxyde de silicium activé et d'un composant aluminoxy activé, la part du composant de dioxyde de silicium activé dans le mélange réactif étant inférieure à la part du composant aluminoxy activé, et
le composant pulvérulent étant sensiblement exempt de composés de dioxyde de calcium, de composés de type ciment et de composés contenant de l'oxyde de fer.

13. Procédé selon la revendication 12, **caractérisé en ce que** l'on utilise un composant pulvérulent, dans lequel le composant aluminoxy activé comprend un oxyde d'aluminium, un hydroxyde d'aluminium et/ou un silicate d'aluminium.

14. Procédé selon la revendication 13, **caractérisé en ce que** le composant aluminoxy activé comprend au moins 60 % en poids d'oxydes d'aluminium et/ou d'hydroxydes d'aluminium.

15. Procédé selon l'une quelconque des revendications 12 à 14, **caractérisé en ce que**
le composant pulvérulent comprend 30 à 60 % en poids, de préférence 40 à 50 % en poids du mélange réactif, et
le mélange réactif comprend de 5 à 90 % en poids, de préférence 40 à 80 % en poids, de composant aluminoxy et 4 à 40 % en poids, de préférence 8 à 15 % en poids de composant de dioxyde de silicium.

16. Procédé selon l'une quelconque des revendications 1 à 15, **caractérisé en ce que**, à l'étape a), on utilise un matériau de pose, qui a été fabriqué par mélange d'un composant liant de silicate alcalin avec un composant pulvérulent en présence d'eau, le matériau de pose étant sensiblement exempt de composés d'oxyde de calcium, de composés de type ciment et de composés contenant de l'oxyde de fer ainsi qu'exempt de particules métalliques et carbonées conductrices.
